Europäisches Patentamt

European Patent Office

Office européen des brevets

(19)

(11) Veröffentlichungsnummer: **0 348 686**

**A1**

(12) # EUROPÄISCHE PATENTANMELDUNG

(21) Anmeldenummer: 89110002.6

(22) Anmeldetag: 02.06.89

(51) Int. Cl.4: **C03B 5/00 , C03B 19/00**

(30) Priorität: 30.06.88 CH 2493/88

(43) Veröffentlichungstag der Anmeldung:
03.01.90 Patentblatt 90/01

(84) Benannte Vertragsstaaten:
AT CH DE FR GB LI NL SE

(71) Anmelder: ASEA BROWN BOVERI AG
Haselstrasse
CH-5401 Baden(CH)

(72) Erfinder: Jochum, Joachim, Dr.
Pilgerstrasse 20
CH-5400 Baden(CH)
Erfinder: Wieckert, Christian, Dr.
Pilgerstrasse 2
CH-5400 Baden(CH)

(54) **Austragvorrichtung.**

(57) Diese Austragvorrichtung dient der Austragung von Schmelzgut (14) aus einem Schmelzbad (1) in einer Wanne (2) eines wärmeisolierten Schmelzofens. Sie weist mindestens eine, mit einer temperaturfesten Wandung (11) versehene, durch die Isolierschicht (7) des Schmelzofens führende Austragöffnung (10) auf.

Mit einfachen Mitteln soll eine Austragvorrichtung für die kontinuierliche Austragung von Schmelzgut aus Schmelzöfen geschaffen werden, bei welcher der Austragquerschnitt konstant bleibt. Dies wird dadurch erreicht, dass die mindestens eine Austragöffnung (10) sich senkrecht zur Oberfläche (3) des Schmelzbades (1) nach unten erstreckt. Diese Austragöffnung (10) ist mit einer temperaturfesten Wandung (11) ausgekleidet, welche in das Schmelzbad (1) hineinragt und dort dessen Temperatur annimmt. Eine Lochplatte (12) mit mindestens einer Öffnung (13) deckt die Austragöffnung (10) im Innern des Schmelzbades (1) ab.

FIG.1

EP 0 348 686 A1

## Austragvorrichtung

Die Erfindung geht aus von einer Austragvorrichtung für die Austragung von Schmelzgut aus einem Schmelzbad in einer Wanne im Innern eines wärmeisolierten Schmelzofens, mit mindestens einer, eine temperaturfeste Wandung aufweisenden, durch die Isolierschicht des Schmelzofens führenden Austragöffnung für das Schmelzgut.

### Stand der Technik

Es sind, beispielsweise aus der Glasindustrie, Schmelzöfen bekannt, bei denen das Schmelzgut intermittierend ausgetragen wird. Dabei wird das Schmelzgut in Portionen aus dem Schmelzbad nach oben hin entnommen. Hierfür muss der Schmelzofen jeweils geöffnet werden oder es bleiben Entnahmeöffnungen dauernd offen, was einen erheblichen Wärmeverlust und damit einen erhöhten Energieverbrauch zur Folge hat. Es sind auch Schmelzöfen bekannt, die geneigt werden können, sodass das Schmelzgut durch eine Giesstülle abfliessen kann. Nach jedem dieser Giessvorgänge wird der Schmelzofen wieder in die Ausgangsstellung zurückgestellt, und das in der Giesstülle verbliebene Schmelzgut erstarrt und setzt allmählich den Austragquerschnitt in der Giesstülle zu. Derartige Austragvorrichtungen sind vergleichsweise aufwendig, da sie nur durch aufwendige Zusatzheizungen benutzerfreundlich gestaltet werden können.

### Darstellung der Erfindung

Hier will die Erfindung Abhilfe schaffen. Die Erfindung, wie sie in den Ansprüchen gekennzeichnet ist, löst die Aufgabe, mit einfachen Mitteln eine Austragvorrichtung für die kontinuierliche Austragung von Schmelzgut aus Schmelzöfen zu schaffen, bei welcher der Austragquerschnitt konstant bleibt.

Die durch die Erfindung erreichten Vorteile sind im wesentlichen darin zu sehen, dass ohne Zusatzheizung mit grosser Sicherheit ein zu frühes Erstarren des Schmelzgutes im Bereich der Austragvorrichtung vermieden wird. Der für die Austragung nötige Querschnitt bleibt so stets erhalten und Zusatzeinrichtungen für die Reinigung dieses Querschnittes werden nicht benötigt. Das kontinuierliche Austragen des Schmelzgutes ermöglicht einen zuverlässigen Dauerbetrieb des Schmelzofens.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnungen, welche lediglich einen Ausführungsweg darstellen, näher erläutert.

### Kurze Beschreibung der Zeichnungen

Es zeigen:

Fig. 1 eine schematische Darstellung eines Schmelzofens mit einer ersten Ausführungsform der erfindungsgemässen Austragvorrichtung;

Fig. 2 eine zweite Ausführungsform der erfindungsgemässen Austragvorrichtung;

Fig. 3 eine dritte Ausführungsform der erfindungsgemässen Austragvorrichtung; und

Fig. 4 eine vierte Ausführungsform der erfindungsgemässen Austragvorrichtung.

Bei allen Figuren sind gleich wirkende Elemente mit gleichen Bezugszeichen versehen.

### Wege zur Ausführung der Erfindung

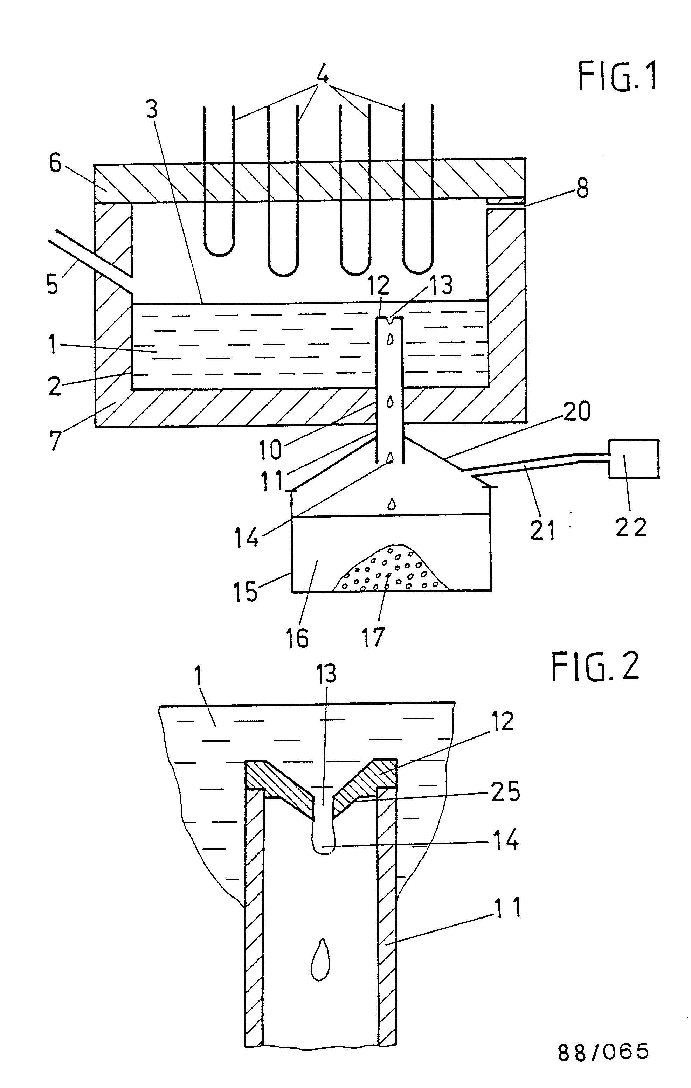

In der Fig. 1 ist ein Schmelzofen schematisch dargestellt. Dieser Schmelzofen weist im Inneren eine teilweise mit einem Schmelzbad 1 gefüllte Wanne 2 aus hochtemperaturfestem Material auf. Das Schmelzbad 1 wird durch auf seine Oberfläche 3 einwirkende elektrische Heizkörper 4 schmelzflüssig gehalten. Durch eine Beschickungsöffnung 5 werden zu schmelzende Partikel in den Schmelzofen eingebracht und durch die Einwirkung der Heizkörper 4 geschmolzen. Diese Heizkörper 4 werden durch einen mit einer Wärmeisolation versehenen Deckel 6 gehalten. Dieser Dekkel 6 schliesst die Wanne 2, welche mit einer Isolierschicht 7 umkleidet ist, nach oben hin ab. Die Isolierschicht 7 muss vergleichsweise dick ausgebildet werden, um Wärmeverluste und damit auch den Energieverbrauch des Schmelzofens vergleichsweise klein zu halten. Ein Gasabzug 8, der hier nur angedeutet ist, sorgt für Druckausgleich im Inneren des Schmelzofens.

Durch diese Isolierschicht erstreckt sich senkrecht zur Oberfläche des Schmelzbades nach unten eine Austragöffnung 10, welche mit einer temperaturfesten Wandung 11 ausgekleidet ist. Diese Wandung ragt nach oben in das Schmelzbad 1 hinein und ist dort mit einer Lochplatte 12 abgedeckt. Die Lochplatte 12 weist mindestens eine Öffnung auf, durch welche das heisse Schmelzgut 14 austreten kann. Das Schmelzgut 14 bildet Tropfen, wie hier dargestellt, oder einen Strahl, und fällt frei nach unten in einen Sammelbehälter 15, der von Zeit zu Zeit gewechselt werden muss. Hier ist der Sammelbehälter 15 teilweise mit Wasser 16 gefüllt, in welchem das Schmelzgut 14 abgeschreckt wird und dabei zu einem glasartigen Granulat 17 zerspringt, welches sich im Sammelbehälter 15 ansammelt. Das fallende Schmelzgut 14 kommt mit der Wandung 11 nicht in Berührung, sodass sich keine störenden Ablagerungen an dieser Wandung 11 niederschlagen können. Die Heizkörper 4 werden vorteilhaft so angeordnet, dass das Schmelzbad 1 im Bereich oberhalb der Lochplatte 12 immer hinreichend heiss ist, um eine unterbrechungsfreie Austragung des Schmelzgutes 14 zu ermögliche.

Die Lochplatte 12 und der obere Teil der Wandung 11 nehmen die Temperatur des Schmelzbades 1 an, wodurch ein Verstopfen der Oeffnung 13 mit grosser Sicherheit vermieden wird. In dieser heissen Zone bleibt das Schmelzgut stets flüssig, auch nach dem Durchtritt durch die Öffnung 13, und löst sich vom Rand dieser Öffnung 13 ab.

Der Sammelbehälter 15 ist mit einer gasdicht angepassten Abdekkung 20 versehen, welche gasdicht mit dem unteren Teil der Wandung 11 verbunden ist. Eine Rohrleitung 21 verbindet die Abdekkung 20 mit einer Vakuumpumpe 22. Etwa notwendige Dampfabscheider vor der Vakuumpumpe 22 sind nicht eingezeichnet. Wegen der Viskosität des Schmelzbades 1 kann es nämlich vorkommen, dass das Schmelzgut 14 zunächst nicht durch die Öffnung 13 hindurchtritt. Die Zugabe eines als Verflüssiger wirkenden Stoffes in das Schmelzbad kann hier Abhilfe schaffen. Es ist jedoch auch möglich, die Austragvorrichtung mittels der Vakuumpumpe 22 mit Unterdruck zu betreiben, um so das Schmelzgut 14 durch die Öffnung 13 zu saugen. Je nach Viskosität des Schmelzbades 1 kann nach vergleichsweise kurzer Zeit die Beaufschlagung mit Unterdruck entfallen und die damit in Gang gesetzte Austragung läuft dann selbsttätig weiter. Es ist aber durchaus denkbar, dass die Austragung unter dauernder Beaufschlagung mit Unterdruck erfolgt.

Als temperaturfeste Wandung 11 wird vorteilhaft ein zylindrisches Rohr aus Aluminiumoxid ($Al_2O_3$) eingesetzt, da derartige Rohre handelsüblich sind. Auch die Lochplatte 12 wird aus diesem Material hergestellt. Bei einem Prototyp genügte eine Wanddicke des Rohres von etwa 3 mm bei einem Gesamtdurchmesser von 30 mm, die Lochplatte 12 war 4 mm dick und die zylindrische Öffnung 13, die zentral angeordnet war, wies einen Durchmesser von 4 mm auf. Dieser Prototyp erreichte einen Materialdurchsatz von rund 500 Gramm pro Stunde. Die Oberfläche 3 des ca 1300°C heissen Schmelzbades 1 lag dabei wegen dessen Viskosität rund 1 cm über der Oberkante der Lochplatte 12. Das Rohr und die Lochplatte 12 bildeten eine mechanisch zusammenhängende Einheit.

In der Fig. 2 ist eine besonders vorteilhafte Ausgestaltung der Lochplatte 12 dargestellt. Die schmelzbadseitige Oberfläche der Lochplatte 12 ist trichterförmig ausgebildet und im Zentrum dieses Trichters ist die Öffnung 13 angeordnet. Das durch diese Öffnung 13 hindurchtretende Schmelzgut 14 löst sich von der unteren Kante der Öffnung 13 ab. An dieser Stelle können sich keine Ablagerungen bilden, welche die Öffnung 13 einengen, da hier anschliessend an die Öffnung 13 eine ansteigende Zone 25 ausgebildet ist, über welche das flüssige Schmelzgut entgegen der Schwerkraft nicht hinaufsteigen kann. Selbst bei einem kurzzeitigen Aussetzen der Austragung können sich hier keine störenden Ablagerungen festsetzen.

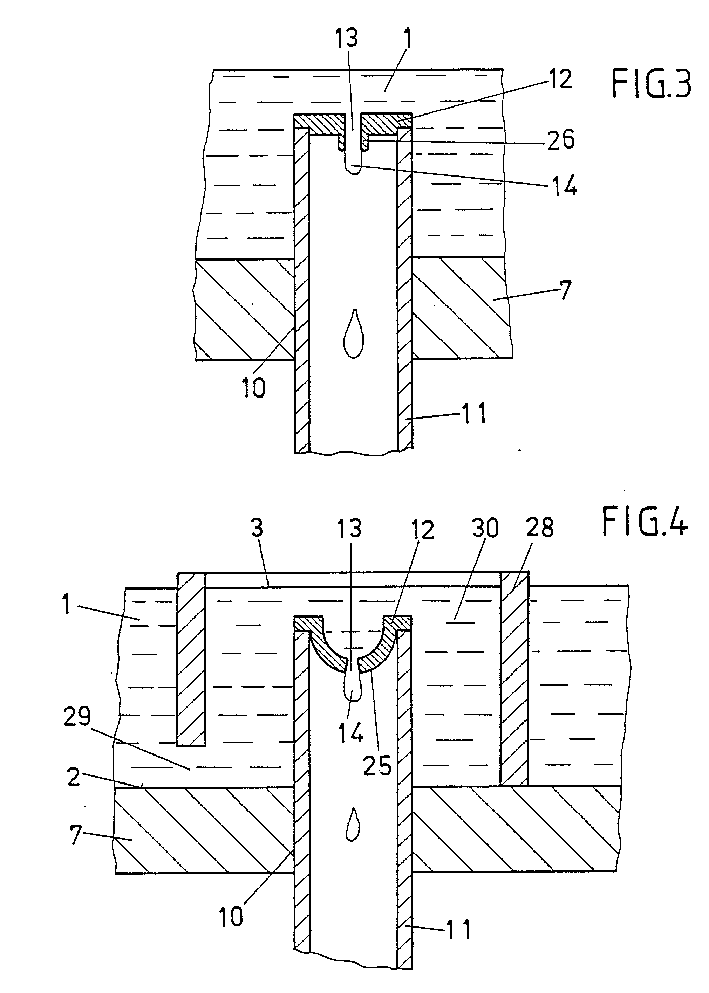

Ähnlich wie diese oben beschriebene Ausgestaltung wirkt auch die Ausgestaltung gemäss Fig. 3. Bei dieser Teilansicht einer Austragvorrichtung ist die Öffnung 13 nach unten düsenförmig verlängert, sodass auch hier keine nennenswerte Möglichkeit für störende Ablagerungen besteht.

In der Fig. 4 ist eine Teilansicht einer weiteren Ausführungsform einer Austragvorrichtung dargestellt. Die Austragöffnung 10 umgibt eine konzentrisch angeordnete Zwischenwand 28, die sich auf die Wanne 2 abstützt und mit dieser verbunden ist. Diese Zwischenwand 28 lässt zwar Durchlässe 29 am Boden der Wanne 2 offen, teilt aber, da sie über die Oberfläche 3 des Schmelzbades 1 hinausragt, einen Teil 30 dieses Schmelzbades ab. Das hat zur Folge, dass alle Bestandteile des Schmelzbades 1 zuerst durch die Durchlässe 29 fliessen müssen und dabei besonders gut vermischt werden, ehe sie ausgetragen werden können. Durch diese Anordnung wird verhindert, dass spezifisch leichtere Teile des Schmelzbades sich im Bereich der Oberfläche 3 konzentrieren und zuerst ausgetragen werden, wogegen sich die schweren Teile unten in der Wanne 2 anreichern und erst später ausgetragen werden, was zu einer unterschiedlichen Qualität des Granulats 17 führen würde.

Die Lochplatte in Fig. 4 weist eine halbkugelförmige Vertiefung auf, an deren tiefster Stelle die Öffnung 13 angebracht ist, welche sich nach unten trichterförmig erweitert. Auch hier schliesst sich an den unteren Rand der Öffnung 13 eine ansteigende Zone 25 an, was störende Ablagerungen, wie bereits beschrieben, mit grosser Sicherheit verhindert.

Bei besonders dünnflüssigem Schmelzgut 14 kann mit vertretbarem Aufwand ein Spritzen nicht verhindert werden. Die Spritzer würden sich im kälteren Bereich der Wandung 11 anlagern und diese wachsenden Ablagerungen würden früher oder später die Austragung behindern. Für diese speziellen Fälle ist es sinnvoll, wenn die Wandung 11 nach unten auseinanderlaufend gestaltet wird, sodass die Spritzer die Wandung nicht mehr erreichen können.

Wenn der Schmelzofen im Betrieb ist, dichtet das stets über der Oberkante der Lochplatte 12 stehende Schmelzbad 1 das Ofeninnere gegen die Austragöffnung 10 ab. Wird der Deckel 6 gasdicht auf die Wanne 2 aufgesetzt, so können im Schmelzofen auch Problemstoffe geschmolzen werden, die beim Schmelzen schädlich Gase und Dämpfe freisetzen, die durch den Gasabzug 8 zur weiteren Verarbeitung gelangen. Beim Anfahren des Schmelzofens ist diese Gasdichtheit zunächst nicht gewährleistet, da die Oberfläche 3 des Schmelzbades 1 zu tief liegt, um abdichten zu können. Beim Anfahren wird der Schmelzofen daher zuerst solange mit beispielsweise quarzhaltigem Sand beschickt, bis das Schmelzbad 1 seine Dichtungsfunktion erfüllt und erst danach werden die Problemstoffe zugeführt und geschmolzen.

## Ansprüche

1. Austragvorrichtung für die Austragung von Schmelzgut (14) aus einem Schmelzbad (1) in einer Wanne (2) im Innern eines wärmeisolierten Schmelzofens, mit mindestens einer, eine temperaturfeste Wandung (11) aufweisende, durch die Isolierschicht (7) des Schmelzofens führenden Austragöffnung (10) für das Schmelzgut (14), dadurch gekennzeichnet,
- dass die Austragung kontinuierlich erfolgt,
- dass die mindestens eine Austragöffnung (10) sich senkrecht zur Oberfläche (3) des Schmelzbades (1) nach unten erstreckt;
- dass die mindestens eine Austragöffnung (10) ausgekleidet ist mit einer temperaturfesten Wandung (11), welche in das Schmelzbad (1) hineinragt und dort dessen Temperatur annimmt, und
- dass eine Lochplatte (12) mit mindestens einer Öffnung (13) die mindestens eine Austragöffnung (10) im Innern des Schmelzbades (1) abdeckt.

2. Austragvorrichtung nach Anspruch 1, dadurch gekennzeichnet,
- dass die temperaturfeste Wandung (11) als zylindrisches Rohr ausgebildet ist, und
- dass die mindestens eine, vorzugsweise zylindrische Öffnung (13) der Lochplatte (12) so angeordnet ist, dass durchtretendes Schmelzgut (14) die Innenwand des zylindrischen Rohres nicht berührt.

3. Austragvorrichtung nach Anspruch 2, dadurch gekennzeichnet, dass die Wandung (11) und die Lochplatte (12) mechanisch zu einer Einheit verbunden sind.

4. Austragvorrichtung nach Anspruch 2, dadurch gekennzeichnet,

- dass die Lochplatte (12) schmelzbadseitig eine trichterförmige Vertiefung aufweist, in deren Zentrum die mindestens eine Öffnung (13) angeordnet ist, und
- dass die Lochplatte (12) auf der dem Schmelzbad (1) abgewandten Seite anschliessend an die Öffnung (13) eine ansteigende Zone (25) aufweist.

5. Austragvorrichtung nach Anspruch 2, dadurch gekennzeichnet,
- dass die Lochplatte (12) schmelzbadseitig eben ist, und
- dass die Lochplatte (12) auf der dem Schmelzbad (1) abgewandten Seite anschliessend an die Öffnung (13) eine düsenförmige Verlängerung (26) aufweist.

6. Austragvorrichtung nach Anspruch 2, dadurch gekennzeichnet,
- dass die Austragöffnung (10) im Innern des Schmelzofens konzentrisch von einer temperaturfesten Zwischenwand (28) umgeben ist,
- dass diese Zwischenwand (28) von der Wanne (2) des Schmelzofens getragen wird und über die Oberfläche (3) des Schmelzbades (1) hinausragt, und
- dass mindestens ein längs des Bodens der Wanne (2) ertreckter Durchlass (29) zwischen der Wanne (2) und der Zwischenwand (28) vorgesehen ist.

7. Austragvorrichtung nach mindestens einem der voranstehenden Ansprüche, dadurch gekennzeichnet, dass diese Austragvorrichtung gasdicht ausgebildet ist und mit Unterdruck betrieben wird.

FIG.1

FIG.2

88/065

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 254 501  (SAINT-GOBAIN)<br>* Insgesamt * & DE-C-811 138<br>--- | 1-3,6 | C 03 B   5/00<br>C 03 B  19/00 |
| X | US-A-4 350 516  (FAULKNER)<br>* Insgesamt *<br>--- | 1 | |
| A | GB-A-  108 217  (EMPIRE MACHINE CO.)<br>* Insgesamt *<br>--- | 6 | |
| A | DE-B-1 010 243  (AUERGESELLSCHAFT)<br>* Insgesamt *<br>--- | 6 | |
| A | GB-A-2 043 049  (DEUTSCHE GESELLSCHAFT FÜR WIEDERAUFARBEITUNG VON KERNBRENNSTOFFEN mbH)<br>* Insgesamt *<br>--- | 1 | |
| A | US-A-3 282 066  (SEARIGHT)<br>* Insgesamt *<br>--- | 1 | |
| A | US-A-3 985 530  (HYND)<br>* Insgesamt *<br>----- | 1 | |

### RECHERCHIERTE SACHGEBIETE (Int. Cl.4)

C 03 B

Der vorliegende Recherchenbericht wurde für alle Patentansprüche erstellt

| Recherchenort | Abschlußdatum der Recherche | Prüfer |
|---|---|---|
| DEN HAAG | 18-07-1989 | VAN DEN BOSSCHE W.L. |

EPO FORM 1503 03.82 (P0403)